# EUROPÄISCHE PATENTSCHRIFT

(11) **EP 4 074 950 B1**
(45) Veröffentlichungstag und Bekanntmachung des Hinweises auf die Patenterteilung: **21.08.2024**
(21) Anmeldenummer: 22020175.0
(22) Anmeldetag: 14.04.2022
(51) Int. Cl.: F02B 37/18, F16C 7/02, F16C 9/04, F16C 11/02

(54) **REGELSTANGE FÜR EINE AUTOMOTIVE ANWENDUNG, INSBESONDERE FÜR EINEN TURBOLADER EINES VERBRENNUNGSMOTORS**
CONTROL ROD FOR AN AUTOMOTIVE APPLICATION, IN PARTICULAR FOR A TURBOCHARGER OF A COMBUSTION ENGINE
BARRE DE COMMANDE POUR UNE APPLICATION AUTOMOBILE, EN PARTICULIER POUR UN TURBOCOMPRESSEUR D'UN MOTEUR À COMBUSTION INTERNE

(30) Priorität: 15.04.2021 DE 102021001966; 15.04.2021 DE 202021001380 U
(43) Veröffentlichungstag der Anmeldung: 19.10.2022
(73) Patentinhaber: Carbidur AG, 75210 Keltern (DE)
(72) Erfinder: WALTER, Horst, 75210 Keltern (DE)
(74) Vertreter: Leitner, Waldemar

(56) Entgegenhaltungen:
- WO-A1-2022/090765
- DE-U1- 202019 103 115
- US-A1- 2015 226 111

## Beschreibung

Die Erfindung betrifft eine Regelstange für eine automotive Anwendung, insbesondere für einen Turbolader eines Verbrennungsmotors, welche einen Grundkörper mit einer Aufnahmeöffnung besitzt, in welcher ein Hartmetall-Einsatz, insbesondere ein Hartmetall-Ring, eingesetzt ist, sowie ein eine derartige Regelstange verwendendes Regelgelenk.

Eine derartige Regelstange oder ein derartiges Regelgelenk ist bekannt, z.B. aus DE 202019103115 U1 oder US 2015/226111 A1, und wird insbesondere in der Automobilindustrie verwendet, um eine Komponente eines Verbrennungsmotors zu betätigen, zu steuern oder zu regeln. Beispielsweise werden derartige Regelstangen oder Regelgelenke zur Steuerung eines Turboladers eines Verbrennungsmotors verwendet. Die Regelstange ist dabei hohen Temperaturen von 600°C oder mehr ausgesetzt und unterliegt einer hohen Rüttelbelastung, so dass derartige Bauteile einem hohen Verschleiß unterliegen. Es ist bekannt, in die Aufnahmeöffnung des Grundkörpers einen Hartmetall-Einsatz, insbesondere einen Hartmetall-Ring, einzusetzen, um den Verschleiß zu reduzieren. Problematisch ist hierbei die Verbindung des Hartmetall-Einsatzes mit dem Grundkörper der Regelstange, da aufgrund der vorgenannten hohen Temperaturen eine Verbindung des Hartmetall-Einsatzes mit dem Grundkörper durch konventionelle Vorgehensweise wie Verschrumpfen, Verlöten, Verkleben oder Verschrauben nicht oder nur unzureichend möglich ist: Edelstahl weist typischerweise einen Wärmeausdehnungskoeffizienten von ungefähr 0,0000165 auf, während ein typischer Wärmeausdehnungskoeffizient eines Hartmetalls ungefähr 0,0000058 beträgt. Geht man nun von üblichen Abmessungen derartiger Bauteile aus, nämlich beispielsweise von einem Durchmesser der Regelstange im Bereich der Aufnahmeöffnung von ungefähr 23 mm und einem Durchmesser der Aufnahmeöffnung von 15 mm, was zu einem Außendurchmesser des Hartmetall-Rings von ebenfalls ungefähr 15 mm führt, so würde sich ein aus Edelstahl gefertigter Grundkörper sich bei 600°C um 0,5 mm ausdehnen, während sich bei der gleichen Temperatur der Hartmetall-Ring nur maximal 0,04 mm ausdehnen würde. Mit anderen Worten: Der Grundkörper der Regelstange würde sich um mehr als das Zehnfache ausdehnen als der in seine Aufnahmeöffnung eingesetzte Hartmetall-Ring. Dies hätte dann zur Folge, dass der Hartmetall-Ring aus dem Edelstahl-Grundkörper der Regelstange herausfallen oder sich in seiner Aufnahmeöffnung verdrehen würde, was in nachteiliger Art und Weise zu einem Ausschlagen der Aufnahmeöffnung des Grundkörpers führen würde.

Es ist daher Aufgabe der vorliegenden Erfindung, eine Regelstange der eingangs genannten Art derart weiterzubilden, dass ein verbesserter Sitz des Hartmetall-Einsatzes in der Aufnahmeöffnung des Grundkörpers der Regelstange gegeben ist. Außerdem soll ein für die erfindungsgemäße Regelstange besonders geeignetes Regelgelenk geschaffen werden.

Diese Aufgabe wird durch die erfindungsgemäße Regelstange dadurch gelöst, dass der Grundkörper des Hartmetall-Einsatzes eine Außenkontur aufweist, durch welche eine Verdrehsicherung des Hartmetall-Einsatzes in der Aufnahmeöffnung des Grundkörpers der Regelstange ausgebildet ist, dass der Grundkörper der Regelstange zumindest an einer der beiden axialen Seiten der Aufnahmeöffnung des Grundkörpers des Hartmetall-Einsatzes einen in axialer Richtung wirkenden Anschlag für den Grundkörper des Hartmetall-Einsatzes aufweist.

Indem nun erfindungsgemäß vorgesehen ist, dass die Außenkontur des Hartmetall-Einsatzes derart gestaltet ist, dass für den in der Aufnahmeöffnung der erfindungsgemäßen Regelstange aufgenommenen Hartmetall-Einsatzes eine Verdrehsicherung ausgebildet ist, wird ein verbesserter Sitz des Hartmetall-Einsatzes erreicht.

Die Erfindung sieht vor, dass der Hartmetall-Einsatz im Grundkörper der erfindungsgemäßen Regelstange in axialer Richtung gesichert ist. Gemäß einer vorteilhaften Weiterbildung der Erfindung ist hierzu mindestens ein axialer Anschlag vorgesehen, wobei bevorzugt wird, dass an beiden axialen Seiten jeweils ein axialer Anschlag vorhanden ist. Die Ausbildung dieses mindestens einen Anschlags erfolgt vorzugsweise durch ein Herausdrücken von Materialbereichen beim Einpressvorgang des Hartmetall-Einsatzes in den Grundkörper der erfindungsgemäßen Regelstange und/oder durch ein Umbördeln zumindest eines Teils des die Aufnahmeöffnung umgebenden Materials des Grundkörpers der Regelstange auf den Hartmetall-Einsatz.

Eine vorteilhafte Weiterbildung der Erfindung sieht vor, dass zur Ausbildung einer derartigen Verdrehsicherung der Grundkörper des Hartmetall-Einsatzes eine Anzahl von in seiner äußeren Umfangsfläche radial abstehenden Vorsprüngen, insbesondere Zähne, aufweist, und dass diese Vorsprünge in entsprechend konfigurierte Ausnehmungen des die Aufnahmeöffnung umgebenden Materialbereichs des Grundkörpers der Regelstange eintauchen. Gemäß einer bevorzugten Ausgestaltung wird dies dadurch erreicht, dass beim Einsetzen des erfindungsgemä-ßen Hartmetall-Einsatzes in die Aufnahmeöffnung der Regelstange diese Vorsprünge in den Grundkörper der Regelstange eingepresst werden, wodurch die vorgenannten Ausnehmungen ausgebildet werden.

Gemäß einer weiteren vorteilhaften Ausgestaltung der Erfindung wird vorgeschlagen, dass alternativ zu den vorgenannten Vorsprüngen oder in Kombination hiermit die Außenkontur des Grundkörpers des Hartmetall-Einsatzes eine nichtrotationssymmetrische Form, z. B. die eines regulären Vielecks, aufweist. Auch hierdurch wird eine Verdrehsicherung des Hartmetall-Einsatzes im Grundkörper der erfindungsgemäßen Regelstange ausgebildet.

Eine weitere vorteilhafte Weiterbildung der Erfindung sieht vor, dass der Hartmetall-Einsatz der erfindungsgemäßen Regelstange aus einem Hartmetall gebildet ist, das als Hartstoff Wolframcarbid und als Bindemittel Nickel enthält. Ein derartiger Werkstoff zeichnet sich durch eine gute Beständigkeit gegenüber hohen Temperaturen, eine große bis sehr große Härte und somit eine hohe bis sehr hohe Verschleißfestigkeit aus. Ein aus diesem Werkstoff gebildetes Lager kann ohne Schmierung betrieben werden. Der vorgenannte Werkstoff ist daher insbesondere für einen Einsatz im automotiven Bereich geeignet. Bevorzugt wird, dass das Hartmetall mindestens ein Zusatzcarbid aufweist, um einer Korrosion des Hartmetalls entgegenzuwirken oder eine solche zu verhindern.

Eine vorteilhafte Weiterbildung der Erfindung sieht vor, dass das Hartmetall 80 bis 94 Gew.-% Wolframcarbid, 20 bis 6 Gew.-% Nickel sowie wahlweise mindestens ein Zusatzcarbid in einem Anteil von mehr als 0 bis 2 Gew.-% aufweist, wobei sich die vorgenannten Bestandteile, von Verunreinigungen und Spurenelementen abgesehen, zu 100 Gew.-% ergänzen. Bevorzugt wird hierbei, dass das Hartmetall 86 bis 93 Gew.-%, vorzugsweise 87,0 +/- 0,2 Gew.-% oder 92,8 +/- 0,2 Gew.-% Wolframcarbid, 14 bis 7 Gew.-%, vorzugsweise 12 +/- 0,2 Gew.-% oder 6 +/- 0,2 Gew.-% Nickel sowie bis zu 1,5 Gew.-%, vorzugsweise 0,8 bis 1,2 +/- 0,1 Gew.-% eines oder mehrerer Zusatzcarbide aufweist. Ein derartiger Wolframcarbid-Nickel-Werkstoff ist insbesondere für eine automotive Anwendung, bei der die Regelstange einer höheren oder hohen thermischen Belastung ausgesetzt ist, geeignet.

Eine weitere vorteilhafte Weiterbildung der Erfindung sieht vor, dass der Hartmetall-Einsatz aus einem Hartmetall-Keramik-Werkstoff ausgebildet ist. Ein derartiger Werkstoff zeichnet sich durch eine Beständigkeit gegenüber hohen Temperaturen, eine sehr große Härte und somit eine hohe Verschleißfestigkeit und das Fehlen von Korrosion aus und ist daher ebenfalls insbesondere für einen Einsatz im automotiven Bereich geeignet.

Das erfindungsgemäße Regelgelenk zeichnet sich dadurch aus, dass die erfindungsgemäße Regelstange verwendet wird.

Weitere vorteilhafte Weiterbildungen der Erfindung sind Gegenstand der Unteransprüche.

Weitere Einzelheiten und Vorteile der Erfindung sind dem Ausführungsbeispiel zu entnehmen, das im Folgenden anhand der Figuren beschrieben wird. Es zeigen:
- Figur 1: eine Draufsicht auf ein Ausführungsbeispiel einer als Regelstange ausgebildeten Regelstange,
- Figur 2: einen Schnitt entlang der Linie A-A der Figur 1,
- Figur 3: eine vergrößerte Darstellung des rechten Endbereichs der Figur 2,
- Figur 4: eine Draufsicht auf einen beim Ausführungsbeispiel verwendeten Hartmetall-Einsatz,
- Figur 5: einen Schnitt entlang der Linie B-B der Figur 4,
- Figur 6: eine vergrößerte Darstellung des Details X der Figur 4,
- Figur 7: eine Draufsicht auf eine besonders zur Verwendung mit dem Ausführungsbeispiel der Figuren 1 bis 6 geeignete Regelgelenkplatte,
- Figur 8: einen Schnitt entlang der Linie C-C der Figur 7,
- Figur 9: eine Draufsicht auf einen bei der vorgenannten Regelgelenkplatte verwendeten Hartmetall-Ring,
- Figur 10: einen Schnitt entlang der Linie D-D der Figur 9, und
- Figur 11: ein aus der Regelstange und der Regelgelenkplatte zusammengesetztes Regelgelenk in einer Schnittdarstellung.

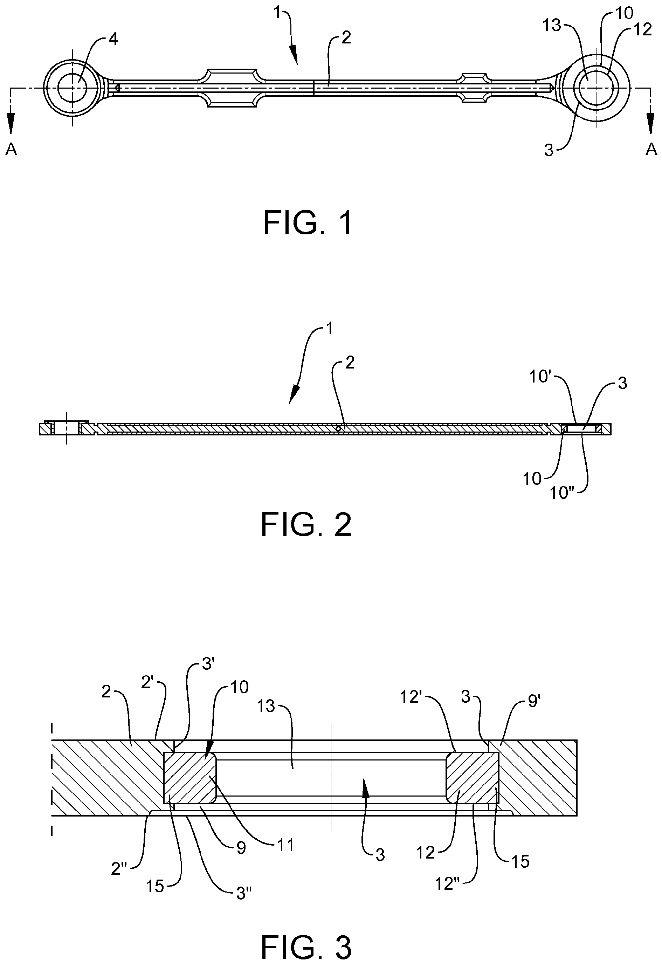

In den Figuren 1 bis 6 ist ein allgemein mit 1 bezeichnetes Ausführungsbeispiel einer Regelstange 1 dargestellt. Wie bereits eingangs ausgeführt, wird eine derartige Regelstange z. B. zur Steuerung eines Turboladers eines Verbrennungsmotors eingesetzt und ist daher hohen thermischen und/oder mechanischen Belastungen unterworfen.

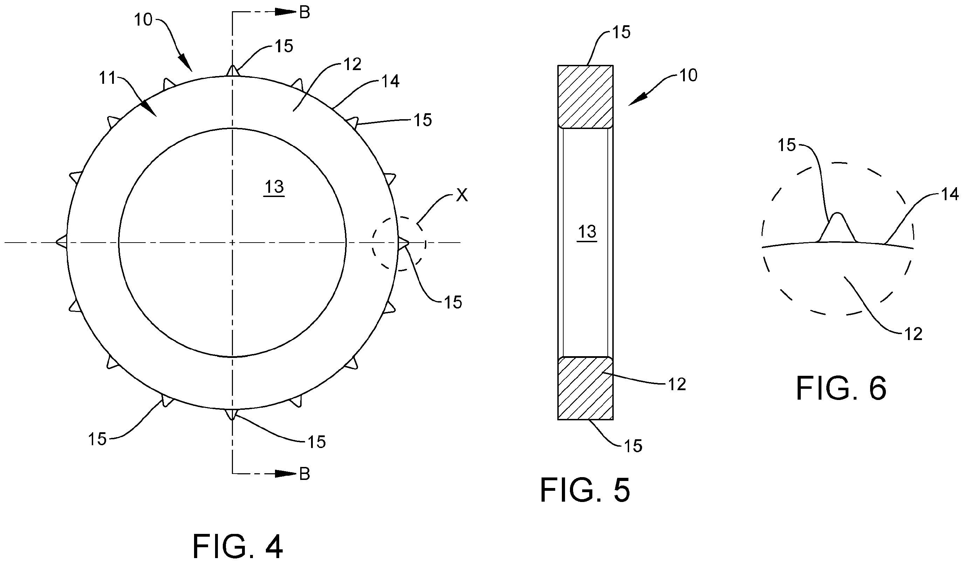

Die Regelstange 1 weist einen stangenförmigen Grundkörper 2 auf, der vorzugsweise aus Edelstahl ausgebildet ist. Der Grundkörper 2 weist eine Aufnahmeöffnung 3 für einen in den Figuren 4 bis 6 dargestellten Hartmetall-Einsatz 10 auf, welcher nachstehend noch anhand der vorgenannten Figuren beschrieben wird. Der Hartmetall-Einsatz 10 ist aus einem Hartmetall, also einem Metallmatrix-Verbundwerkstoff ausgebildet, bei dem Hartstoffe, die als kleine Partikel vorliegen, durch eine Matrix aus Metall zusammengehalten werden. Zur Vermeidung von Wiederholungen wird auf die weiter unten noch folgenden Erläuterungen verwiesen.

Im hier gezeigten Ausführungsbeispiel weist die Regelstange 1 noch eine weitere Aufnahmeöffnung 4 auf, deren Funktion und Ausbildung aber für das Verständnis der nachfolgenden Beschreibung nicht erforderlich ist. Eine derartige Regelstange 1 ist bekannt und muss daher nicht mehr im Detail beschrieben werden.

Die Figuren 4 bis 6 zeigen den bereits vorstehend angesprochenen Hartmetall-Einsatz 10, der im hier gezeigten Ausführungsbeispiel als ein Hartmetall-Ring 11 ausgebildet ist. Dem Fachmann ist aber aus nachfolgender Beschreibung ebenfalls ersichtlich, dass die Ausbildung des Hartmetall-Einsatzes 10 als Hartmetall-Ring 11 zwar die in der automotiven Praxis am häufigsten vorkommende Ausgestaltung sein dürfte, aber die nachfolgend beschriebenen Maßnahmen nicht auf eine ringförmige Ausgestaltung des Hartmetall-Einsatzes 10 beschränkt sind. Der Hartmetall-Einsatz 10 weist einen Grundkörper 12 mit einer innenliegenden Durchtrittsöffnung 13 auf, durch welche die Regelstange 1 direkt oder indirekt mit einem von ihm zu betätigenden oder einem die Regelstange 1 betätigenden Bauteil insbesondere eines Verbrennungsmotors in Wirkeingriff treten kann. In der Regel wird dies dadurch realisiert, dass in die Durchtrittsöffnung 13 des Hartmetall-Einsatzes 10 ein Bolzen aufgenommen ist, welcher mit dem vorgenannten Bauteil verbunden ist und welcher sich in der Durchtrittsöffnung 13 bewegt. Ein derartiger Hartmetall-Einsatz 10 ist ebenfalls bekannt und muss daher hinsichtlich seiner Ausbildung und seiner Funktion nicht näher erläutert werden.

Der Grundkörper 2 der Regelstange 1 ist aus einem Werkstoff ausgebildet, der einen Wärmeausdehnungskoeffizient besitzt, der größer als der Wärmeausdehnungskoeffizient des Grundkörpers 12 des Hartmetall-Einsatzes 10 ist. Wird nun die Regelstange 1 thermisch beaufschlagt, dehnt sich der Grundkörper 2 stärker aus als der Hartmetall-Einsatz 10, so dass die Gefahr besteht, dass bei einer thermischen Erwärmung der Regelstange 1 der Hartmetall-Einsatz 10 seinen sicheren Sitz im Grundkörper 2 verliert.

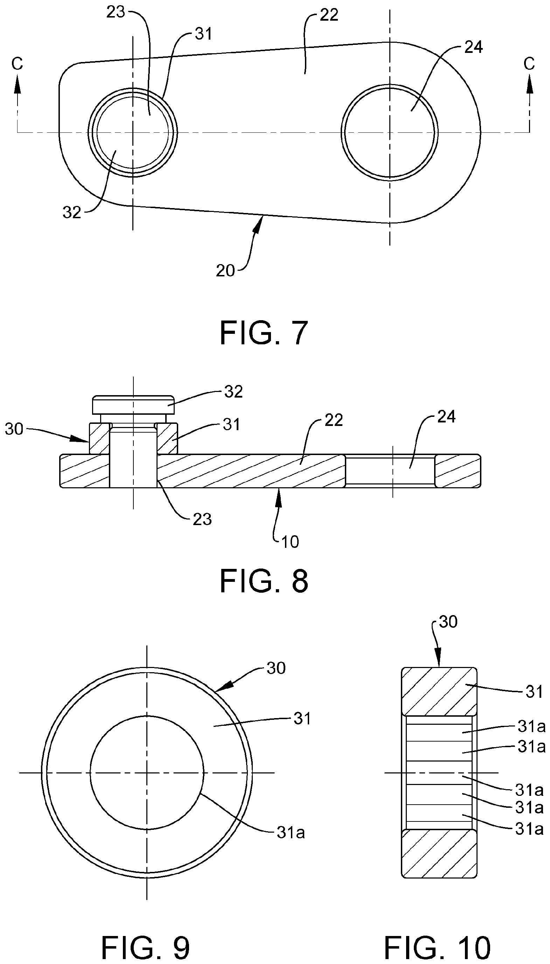

Wie eingangs aufgeführt, ist insbesondere bei automotiven Anwendungen mit einer hohen thermischen und/oder mechanischen Belastung eine hinreichend sichere Verbindung zwischen Hartmetall-Einsatz 10 und dem Grundkörper 2 der Regelstange 1 erforderlich. Um dies zu erreichen, ist beim beschriebenen Ausführungsbeispiel vorgesehen, dass der Grundkörper 12 des Hartmetall-Einsatzes 10 an seiner äußeren Umfangsfläche 14 eine Anzahl von nach außen vorstehenden Vorsprüngen, insbesondere Zähnen 15 aufweist, wie sie im Detail der Figur 9 dargestellt sind.

Wie insbesondere aus der Figur 3 ersichtlich ist, ist die Innenkontur 6 der Aufnahmeöffnung 3 des Grundkörpers 2 und eine Außenkontur 17 des Hartmetall-Einsatzes 10 derart aufeinander abgestimmt, dass der Grundkörper 12 des Hartmetall-Einsatzes 10 in die Aufnahmeöffnung 3 eingesetzt werden kann, sich aber dabei - wie ebenfalls am besten aus Figur 3 ersichtlich - die Zähne 15 in das die Aufnahmeöffnung 3 umgebende Material des Grundkörpers 2 beim Einsetzen des Hartmetall-Einsatzes 10 in die Aufnahmeöffnung 3 einpressen, wodurch Ausnehmungen 8 im Grundkörper 2 ausgebildet werden, in denen die Zähne 15 des Hartmetall-Einsatzes 10 verankert sind. Die radiale Erstreckung der Zähne 15 ist dabei derart gewählt, dass auch bei einer insbesondere wärmebedingten Ausdehnung der Aufnahmeöffnung 3 des Grundkörpers 2, also bei einer Vergrößerung des Durchmessers derselben, die Zähne 15 in Eingriff mit den beim Einpressvorgang des Hartmetall-Einsatzes 10 in den Grundkörper 2 geschaffenen, komplementär zur Form der Zähne 15 geformten Ausnehmungen 8 stehen. Hierdurch wird ein sicherer und insbesondere verdrehsicherer Sitz des Hartmetall-Einsatzes 10 im Grundkörper 2 der Regelstange 1 auch bei höheren und hohen Temperaturen und/oder mechanischen Belastungen erreicht. Durch diese Maßnahme wird ein sicherer Sitz des Hartmetall-Einsatzes 10 im Grundkörper 2 in radialer Richtung erreicht.

Wesentlich ist also, dass durch die Vorsprünge, hier also die Zähne 15, eine Verdrehsicherung für den Hartmetall-Einsatz 10 in der Aufnahmeöffnung 3 des Grundkörpers 2 der Regelstange 1 ausgebildet ist. Die Anzahl der hierfür vorzusehenden Zähne 15 wird vom Einsatzzweck der Regelstange 1, also in der Regel von der dabei auftretenden thermischen und/oder mechanischen Belastung, bestimmt. Es kann für gewisse Anwendungsfälle ausreichend sein, dass nur ein einziger Zahn 15 oder zwei Zähne 15, die dann vorzugsweise diametral gegenüberliegend angeordnet sind, ausreichend ist. Es wird aber bevorzugt, dass mehr als zwei Zähne 15 vorhanden sind, welche vorzugsweise äquidistant über den Umfang des Hartmetall-Einsatzes 10 verteilt angeordnet sind. Bezüglich der Form der Zähne 15 ist auszuführen, dass ein weiter Gestaltungsspielraum besteht. Bevorzugt wird, dass die Form eines oder mehrerer und vorzugsweise aller Zähne 15 derart ist, dass ein leichtes Einpressen des Hartmetall-Einsatzes 10 in das die Aufnahmeöffnung 3 des Grundkörpers 2 umgebende Material möglich ist. Es ist aber auch denkbar, dass auf ein derartiges Einpressen der Zähne 15 verzichtet und anstelle dessen vorgesehen ist, dass mittels entsprechendes Bearbeitungstechniken, wie z. B. mittels eines Laserschneidens in den Grundkörper 2 die vorgenannten Ausnehmungen 8 eingebracht werden, in welche die Zähne 15 des Hartmetall-Einsatzes 10 beim Einsetzen eintauchen können und derart einen hinreichenden Sitz für den Hartmetall-Einsatz 10 ausbilden.

Eine Verdrehsicherung des Hartmetall-Einsatzes 10, welche wie vorstehend beschrieben ausgebildet ist, ist zwar bevorzugt, aber es ist auch möglich, eine derartige Verdrehsicherung durch eine entsprechende Gestaltung der Außenkontur des Hartmetall-Einsatzes 10 zu erreichen. Es ist auch möglich, die äußere Umfangsfläche 14 des Hartmetall-Einsatzes 10, also deren Außenkontur, entsprechend zu gestalten, um eine Verdrehsicherung des Hartmetall-Einsatzes 10 im Grundkörper 2 der Regelstange 1 auszubilden. Hierzu ist dann vorgesehen, dass die Umfangsfläche 14 des Hartmetall-Einsatzes 10 nicht-kreisförmig, also nicht-rotationssymmetrisch, ausgebildet ist. Bevorzugt wird, dass die Umfangsfläche 14 die Form eines Sechskants oder eines Achtkants aufweist. Je nach dem Einsatzzweck der beschriebenen Regelstange 1 ist auch eine andere polygonale Ausgestaltung, z. B. als nicht-regelmäßiges Polygon, oder eine ovale Ausgestaltung der Umfangsfläche 14 des Hartmetall-Einsatzes 10 möglich, um nur einige Beispiele zu nennen.

Auch eine Kombination der vorgenannten Möglichkeiten - nicht-kreisförmige Außenkontur in Verbindung mit Zähnen 15 (oder gleichwirkenden Vorsprüngen) - ist möglich, solange eine hinreichende Verdrehsicherung des Hartmetall-Einsatzes 10 im Grundkörper 2 der Regelstange 1, also eine Sicherung des Hartmetall-Einsatzes 10 in Umfangsrichtung ausgebildet ist.

Um nun auch einen zuverlässigen Sitz des Hartmetall-Einsatzes 10 im Grundkörper 2 in seiner axialen Richtung zu erreichen, ist vorzugsweise vorgesehen, dass die Dicke des Grundkörpers 12 des Hartmetall-Einsatzes 10, also dessen Erstreckung in axialer Richtung, kleiner als die axiale Erstreckung der Aufnahmeöffnung 3 des Grundkörpers 2 der Regelstange 1 ist. Beim Einpressen der Zähne 15 des Hartmetall-Einsatzes 10 verdrängen diese das die Aufnahmeöffnung 3 umgebende Material des Grundkörpers 2. Dadurch werden Materialstege aus dem die Aufnahmeöffnung 3 umgebenden Material des Grundkörpers 2 (vorzugsweise aus Edelmetall) und somit ein erster axialer Anschlag 9 ausgebildet. Da die Einpresstiefe des Hartmetall-Einsatzes 10 in den Grundkörper 2 geringer als die axiale Erstreckung der Aufnahmeöffnung 3 ist, treten folglich die Zähne 15 in der in axialer Richtung verlaufenden Einpressrichtung nicht aus dem Grundkörper 2 heraus, sondern es verbleibt ein Materialrest des Grundkörpers 2, welcher den in die Aufnahmeöffnung 3 eingesetzten Hartmetall-Einsatz 10 gegen ein axiales Durchschieben sichert.

Es ist natürlich auch möglich, den Anschlag 9 auf eine andere Art und Weise auszubilden, z. B. eine in die Aufnahmeöffnung 3 hineinragende und zumindest teilweise umlaufende Stufe auszubilden. Dies wird insbesondere dann bevorzugt, wenn die Verdrehsicherung des Hartmetall-Einsatzes 10 im Grundkörper 2 der Regelstange 1 nicht - wie vorstehend beschrieben - durch vom Grundkörper 12 des Hartmetall-Einsatzes 10 vorstehende radiale Vorsprünge wie die Zähne 15 erfolgt, sondern durch - wie ebenfalls vorstehend beschrieben - eine nichtrotationssymmetrische Ausgestaltung der Außenkontur des Grundkörpers 12 des Hartmetall-Einsatzes 10. Wesentlich diesbezüglich ist nur, dass ein erster Anschlag 9 für den Hartmetall-Einsatz 10 ausgebildet ist, der einem axialen Durchschieben des Hartmetall-Einsatzes 10 entgegenwirkt.

Bevorzugt wird, dass die axiale Erstreckung des Grundkörpers 12 des Hartmetall-Einsatzes 10 derart bemessen ist, dass - nachdem der Hartmetall-Einsatz 10 wie vorstehend beschrieben in den Grundkörper 2 eingesetzt wurde - der obere Rand 12' des Grundkörpers 12 unter dem oberen Rand 3' der Aufnahmeöffnung 3 liegt. Es ist somit möglich, durch ein Umbördeln zumindest eines Teils des die Aufnahmeöffnung 3 umgebenden Materialbereichs des Grundkörpers 2 den Hartmetall-Einsatz 10 auch auf dieser Seite in axialer Richtung zu fixieren, indem ein weiterer axialer Anschlag 9' für den Hartmetall-Einsatz 10 ausgebildet wird.

Durch die Kombination der vorstehend beschriebenen Maßnahmen - Verdrehsicherung + Anschlag 9 auf der in Einpressrichtung vorderen Seite des Hartmetall-Einsatzes 10 und ein weiterer axialer Anschlag 9`, insbesondere durch Umbördeln an der anderen Seite - wird somit ein Käfig für den Hartmetall-Einsatz 10 ausgebildet, welcher diesen von drei Seiten umschließt und somit für einen sicheren Sitz sorgt.

Dem Fachmann ist es aber ersichtlich, dass es nicht zwingend notwendig ist, sämtliche der drei vorgenannten Teilmaßnahmen einzusetzen. Wenn für gewisse Anwendungszwecke eine axiale Fixierung des Hartmetall-Einsatzes 10 im Grundkörper 2 nicht oder nicht von ausschlaggebender Bedeutung ist, so kann natürlich die vorstehend beschriebene Ausbildung eines oder beider axialer Anschläge 9, 9' entfallen. Es ist dann z. B. möglich, den Hartmetall-Einsatz 10 so weit in die Aufnahmeöffnung 3 einzudrücken, dass sein unterer Rand 10" nach dem Einpressvorgang bündig mit dem unteren Rand 3" der Aufnahmeöffnung 3 ist oder der untere Rand 10" des Hartmetall-Einsatzes 10 über diesen unteren Rand 2" des Grundkörpers 2 hervorsteht.

Ebenso ist es möglich, auf die Möglichkeit des Einbördelns des oberen Rands des Grundkörpers 2 über die obere Seitenfläche des Grundkörpers 12 des Hartmetall-Einsatzes 10 zu verzichten, so dass dann der obere Rand 12' des Grundkörpers 12 des Hartmetall-Einsatzes 10 bündig mit dem oberen Rand der Aufnahmeöffnung 3 ist oder sogar über diese hinaussteht.

Der Hartmetall-Einsatz 10 ist aus einem Hartmetall, also einem Metallmatrix-Verbundwerkstoff, ausgebildet, bei dem die Hartstoffe, die als kleine Partikel vorliegen, durch eine Matrix aus Metall zusammengehalten werden. Bevorzugt wird, dass der zur Ausbildung des Hartmetall-Einsatzes 10 verwendete Werkstoff als Hartstoff Wolframcarbid (WC) und als Bindemittel Nickel (Ni) aufweist. Vorzugsweise ist vorgesehen, dass das Hartmetall mindestens ein Zusatzcarbid wie Chrom, Titan und/oder Molybdän aufweist. Ein derartiger Wolframcarbid-Nickel-Werkstoff ist insbesondere für einen Einsatz im automotiven Bereich, insbesondere dann, wenn die Regelstange 1 einer hohen thermischen Belastung ausgesetzt ist, von Vorteil.

Es wird bevorzugt, dass das Hartmetall 80 bis 94 Gew.-% Wolframcarbid, 20 bis 6 Gew.-% Nickel und wahlweise mindestens ein Zusatzcarbid in einem Anteil von mehr als 0 bis zu 2 Gew.-% aufweist, wobei sich die vorgenannten Gewichtsanteile, von Spurenelementen und Verunreinigungen abgesehen, zu 100 Gew.-% ergänzen. Hierbei wird bevorzugt, dass der Anteil von Wolframcarbid zwischen 86 und 93 Gew.-% beträgt und das Hartmetall als Rest Nickel und wahlweise 0 bis 2 Gew.-% mindestens eines Zusatzcarbids, vorzugsweise 0,6 bis 1,4 +/- 0,1 Gew.-% mindestens eines Zusatzcarbids, aufweist.

Besonders bevorzugt wird, dass der Hartmetall-Einsatz 10 aus einem Hartmetall ausgebildet ist, welches vorzugsweise 87 +/- 0,2 Gew.-% Wolframcarbid, 12 +/-0,2 Gew.-% Nickel und 0,6 bis 1,4 Gew.-% mindestens eines Zusatzcarbids aufweist, wobei sich wiederum die vorgenannten Gewichtsanteile, von Verunreinigungen und Spurenelementen abgesehen, zu 100 Gew.-% ergänzen.

Des Weiteren wird besonders bevorzugt, dass der Hartmetall-Einsatz 10 aus einem Hartmetall ausgebildet ist, welches vorzugsweise 92,8 +/- 0,2 Gew.-% WC, 6 +/- 0,2 Gew.-% Ni sowie 1,2 +/- 0,1 Gew.-% mindestens eines Zusatzcarbids aufweist, um nur ein Beispiel eines derartigen Hartmetalls zu erwähnen. Das vorstehend beschriebene Hartmetall besitzt eine Härte nach Rockwell von 91,7 +/- 0,3 HRA und eine Härte nach Vickers von 1680 +/- 50 HV30, jeweils gemessen nach ISO 3738. Die Biegefestigkeit beträgt 3220 +/- 200 N/mm² (gemessen nach ISO 3327) und eine Druckfestigkeit von 6550 +/- 200 N/mm² (gemessen nach ISO 4506). Der Wärmeausdehnungskoeffizient beträgt 5,6 +/- 0,5 K/10° und der Längenausdehnungskoeffizient 5,6 × 10⁻⁶ mm/K.

Die beschriebenen Maßnahmen sind aber nicht auf einen Wolframcarbid-Nickel-Werkstoff beschränkt. Es ist auch möglich, anstelle von Nickel als Binder Kobalt (CO), Eisen (Fe) oder eine Nickel-Chrom-Legierung (NiCr) zu verwenden. Auch ist es möglich, als Hartstoff anstelle von Wolframcarbid ein anderes Carbid wie Titancarbid (TiC), Tantal (TaC), Chrom (CrC) als Hartstoff in Verbindung mit einem der vorgenannten Binder zur Ausbildung des Hartmetall-Einsatzes 10 zu verwenden.

Dem Fachmann ist aber aus der vorliegenden Beschreibung ersichtlich, dass das vorstehend definierte Hartmetall nur exemplarischen Charakter besitzt und die Einsetzbarkeit der beschriebenen Maßnahmen nicht auf das vorstehend definierte Hartmetall beschränkt ist.

Es ist auch noch zu betonen, dass der in dieser Anmeldung verwendete Begriff "Hartmetall" in seiner weitesten Bedeutung zu verstehen ist. Insbesondere soll dieser Begriff auch Verbundwerkstoffe, die ein oder mehrere Hartmetalle sowie weitere Komponenten enthalten, z. B. Hartmetall-Keramik-Werkstoffe, umfassen. Letztere zeichnen sich durch eine Beständigkeit gegenüber hohen Temperaturen von über 1000 °C, eine sehr hohe Härte und somit eine hohe Verschleißfestigkeit und das Fehlen von Korrosion aus und sind daher insbesondere für einen Einsatz im automotiven Bereich geeignet.

Die Figuren 7 bis 10 zeigen nun ein Gelenkelement 20, welches insbesondere zur Verwendung mit der in den Figuren 1 bis 6 dargestellten und vorstehend beschriebenen Regelstange 1 zur Ausbildung eines Regelgelenks geeignet ist. Das Gelenkelement 20 weist einen Grundkörper 22 auf, welcher vorzugsweise aus Edelstahl gefertigt ist. Im hier gezeigten Fall sind im Grundkörper 22 zwei Aufnahmeöffnungen 23 und 24 vorgesehen, wobei aber die Aufnahmeöffnung 24 für das Verständnis der nachstehend beschriebenen Maßnahmen nicht erforderlich ist und somit nicht weiter beschrieben wird. Auch ein derartiges Gelenkelement 20 ist an und für sich bekannt und wird daher im Folgenden nicht mehr im Detail beschrieben.

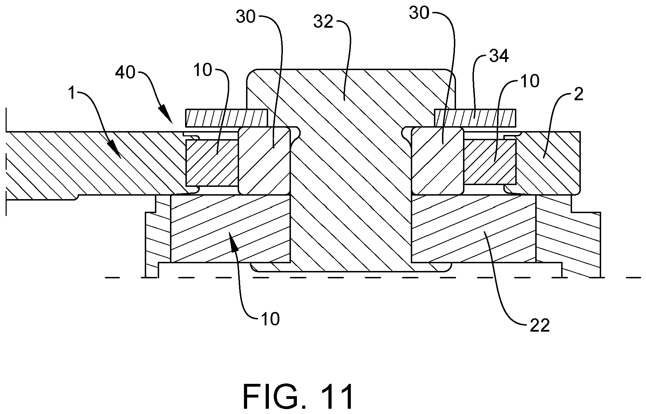

Um nun die Regelstange 1 und das Gelenkelement 20 miteinander verbinden zu können, ist vorgesehen, dass in die Aufnahmeöffnung 23 des Grundkörpers 22 ein Hartmetall-Einsatz 30, insbesondere eine Hartmetall-Buchse 31, in an und für sich bekannter Art und Weise eingesetzt ist. Bevorzugt wird, dass die Hartmetall-Buchse 31 eine Innenfläche mit einem polygonalen Querschnitt und somit mit Flächensegmenten 31a aufweist. Dies hat den Vorteil, dass hierdurch höhere Abdrehmomente erreicht werden. Es ist aber natürlich auch möglich, die Hartmetall-Buchse 31 zylindrisch auszuführen, um nur ein weiteres Beispiel zu nennen. Nachdem die Regelstange 1 und das Gelenkelement 20 derart zueinander lageausgerichtet sind, dass die Aufnahmeöffnungen 3 und 23 miteinander fluchten (siehe Figur 11), wird ein Bolzen 32 durch diese beiden Aufnahmeöffnungen 3 und 23 durchgeschoben und mittels eines Springrings 34 gesichert. An seiner gegenüberliegenden Seite wird der Bolzen 32 am Grundkörper 22 des Gelenkelements 20 vernietet.

Durch die beschriebenen Maßnahmen wird somit in einfacher Art und Weise ein aus dem Regelstange 1 und dem Gelenkelement 20 bestehendes Gelenk 40 ausgebildet, welches sich dadurch auszeichnet, dass das Gelenk 40 aufgrund der Hartmetall-Einsätze 10, 30 ohne Verschleiß oder zumindest verschleißreduziert arbeitet und keine Schmierung benötigt.

## Patentansprüche

1. Regelstange für eine automotive Anwendung, welche einen stangenförmigen Grundkörper (2) und eine in diesem angeordnete Aufnahmeöffnung (3) besitzt, wobei in die Aufnahmeöffnung (3) ein Hartmetall-Einsatz (10) eingesetzt ist und der Hartmetall-Einsatz (10) einen Grundkörper (12) aufweist, dessen Außenkontur auf die Innenkontur der Aufnahmeöffnung (3) des Grundkörpers (2) der Regelstange (1) abgestimmt ist, und wobei der Wärmeausdehnungskoeffizient des Grundkörpers (2) der Regelstange (1) größer als der Wärmeausdehnungskoeffizient des Grundkörpers (12) des Hartmetall-Einsatzes (10) ist, **dadurch gekennzeichnet, dass** der Grundkörper (12) des Hartmetall-Einsatzes (10) eine Außenkontur aufweist, durch welche eine Verdrehsicherung des Hartmetall-Einsatzes (10) in der Aufnahmeöffnung (3) des Grundkörpers (2) der Regelstange (1) ausgebildet ist, dass der Grundkörper (2) der Regelstange (1) zumindest an einer der beiden axialen Seiten der Aufnahmeöffnung (3) des Grundkörpers (12) des Hartmetall-Einsatzes (10) einen in axialer Richtung wirkenden Anschlag (9; 9') für den Grundkörper (12) des Hartmetall-Einsatzes (10) aufweist.

2. Regelstange nach Anspruch 1, **dadurch gekennzeichnet, dass** die axiale Erstreckung des Grundkörpers (12) des Hartmetall-Einsatzes (10) derart bemessen ist, dass im eingesetzten Zustand ein erster Rand (12') des Grundkörpers (12) des Hartmetall-Einsatzes (10) unter dem benachbart hierzu befindlichen Rand (3') der Aufnahmeöffnung (3) der Regelstange (1) liegt, und dass der oder mindestens einer der axialen Anschläge (9, 9') durch ein Umbördeln zumindest eines Teils des die Aufnahmeöffnung (3) umgebenden Bereichs des Grundkörpers (2) der Regelstange (1) über den Grundkörper (12) des Hartmetall-Einsatzes (10) ausgebildet ist.

3. Regelstange nach Anspruch 1 oder 2, **dadurch gekennzeichnet, dass** der Grundkörper (12) des Hartmetall-Einsatzes (10) eine Anzahl von von seiner äußeren Umfangsfläche (14) radial vorstehende Vorsprünge, insbesondere Zähne (15), aufweist, und dass im eingesetzten Zustand des Hartmetall-Einsatzes (10) der Vorsprung oder die Vorsprünge in entsprechend konfigurierte Ausnehmungen (8) des Grundkörpers (2) eintauchen.

4. Regelstange nach Anspruch 3, **dadurch gekennzeichnet, dass** mindestens eine der die Aufnahmeöffnung (3) umgebenden Ausnehmungen (8) des Grundkörpers (2) durch ein Einpressen des oder der Vorsprünge, insbesondere der Zähne (15), des Hartmetall-Einsatzes (10) in das die Aufnahmeöffnung (3) umgebende Material des Grundkörpers (2) ausgebildet ist oder sind.

5. Regelstange nach einem der vorangehenden Ansprüche, **dadurch gekennzeichnet, dass** die äußere Umfangsfläche (14) des Grundkörpers (12) des Hartmetall-Einsatzes (10) nicht-rotationssymmetrisch ausgebildet ist, insbesondere eine polygonale Gestalt aufweist.

6. Regelstange nach dem vorangehenden Anspruch, **dadurch gekennzeichnet, dass** der oder mindestens ein axialer Anschlag (9) durch ein Herausdrücken von Materialbereichen des Grundkörpers (2) der Regelstange (1) beim Einpressvorgang des oder der Zähne (15) des Hartmetall-Einsatzes (10) in den die Aufnahmeöffnungen (3) umgebenden Bereich des Grundkörpers (2) ausgebildet ist.

7. Regelstange nach einem der vorangehenden Ansprüche, **dadurch gekennzeichnet, dass** mindestens ein Anschlag (9) durch einen in die Aufnahmeöffnung (3) ragenden Bereich des Grundkörpers (2) der Regelstange (1) ausgebildet ist.

8. Regelstange nach einem der vorangehenden Ansprüche, **dadurch gekennzeichnet, dass** der Hartmetall-Einsatz (10) aus mindestens einem Hartmetall oder mindestens einem Hartmetall und einem mindestens eine weitere Komponente enthaltenden Werkstoff, insbesondere einem Hartmetall-Keramik-Werkstoff, ausgebildet ist.

9. Regelstange nach einem der vorangehenden Ansprüche, **dadurch gekennzeichnet, dass** der Grundkörper (12) des Hartmetall-Einsatzes (10) aus einem Metallmatrix-Verbundwerkstoff ausgebildet ist, welcher Partikel aus mindestens einem Hartstoff und ein diese Hartstoff-Partikel zusammenhaltendes Bindemittel sowie wahlweise mindestens ein Zusatzcarbid aufweist.

10. Regelstange nach Anspruch 9, **dadurch gekennzeichnet, dass** die Hartstoff-Partikel Wolframcarbid-Partikel und das Bindemittel Nickel ist, und dass vorzugsweise das Hartmetall 86 bis 94 Gew.-% Wolframcarbid, vorzugsweise 87 +/- 0,2 Gew.-% oder 92,8 +/- 0,2 Gew.-% Wolframcarbid, 14 bis 6 Gew.-% Nickel, vorzugsweise 12 +/- 0,2 Gew.-% Nickel oder 6 +/- 0,2 Gew.-% Nickel sowie wahlweise bis 2 Gew.-% mindestens eines Zusatzcarbids, vorzugsweise 0,6 bis 1,4 Gew.-% oder 1,2 +/- 0,1 Gew.-% mindestens eines Zusatzcarbids, aufweist, wobei sich die vorgenannten Gewichtsanteile, von üblichen Verunreinigungen und Spurenelementen abgesehen, zu 100 Gew.-% ergänzen.

11. Regelstange nach einem der vorangehenden Ansprüche, **dadurch gekennzeichnet, dass** die Regelstange eine Regelstange (1) für einen Turbolader eines Verbrennungsmotors ist.

12. Regelgelenk für eine automotive Anwendung, welches ein Regelstange (1) und ein Gelenkelement (20) aufweist, wobei die Regelstange (1) und das Gelenkelement (20) gelenkig miteinander verbunden sind, **dadurch gekennzeichnet, dass** die Regelstange (1) nach einem der Ansprüche 1 bis 11 ausgebildet ist.

13. Regelgelenk nach dem vorangehenden Anspruch, **dadurch gekennzeichnet, dass** das Gelenkelement (20) einen Grundkörper (22) mit einer Aufnahmeöffnung (23) aufweist, und dass ein Bolzen (32) durch die Durchtrittsöffnung (13) des Hartmetall-Einsatzes (10) der Regelstange (1) und die Aufnahmeöffnung (23) des Gelenkelements (20) hindurchgeführt ist.

14. Regelgelenk nach einem der beiden vorangehenden Ansprüche, **dadurch gekennzeichnet, dass** in die Aufnahmeöffnung (23) des Grundkörpers (22) des Gelenkelements (20) ein Hartmetall-Einsatz (30) eingesetzt ist.

## Claims

1. Control rod for an automotive application, which has a rod-shaped base body (2) and a receiving opening (3) arranged in it, wherein a hard metal insert (10) is inserted into the receiving opening (3) and the hard metal insert (10) has a base body (12), the outer contour of which is matched to the inner contour of the receiving opening (3) of the base body (2) of the control rod (1), and wherein the thermal expansion coefficient of the base body (2) of the control rod (1) is greater than the thermal expansion coefficient of the base body (12) of the hard metal insert (10), **characterized in that** the base body (12) of the hard metal insert (10) has got an outer contour by which a rotation lock of the hard metal insert (10) in the receiving opening (3) of the base body (2) of the control rod (1) is provided, that the base body (2) of the control rod (1) has a stop (9; 9') acting in the axial direction for the base body (12) of the hard metal insert (10) at at least one side of the two axial sides of the receiving opening (3) of the base body (12) of the hard metal insert (10).

2. Control rod according to claim 1, **characterized in that** the axial extension of the base body (12) of the hard metal insert (10) is dimensioned such that, in the inserted state, a first edge (12') of the base body (12) of the hard metal insert (10) lies below the edge (3') of the receiving opening (3) of the control rod (1) located adjacent thereto, and that the or at least one of the axial stops (9, 9') is formed by flanging at least a part of the area of the base body (2) of the control rod (1) surrounding the receiving opening (3) over the base body (12) of the hard metal insert (10).

3. Control rod according to claim 1 or 2, **characterized in that** the base body (12) of the hard metal insert (10) has a number of projections projecting radially from its outer peripheral surface (14), in particular teeth (15), and that in the inserted state of the hard metal insert (10) the projection or the projections dip into correspondingly configured recesses (8) of the base body (2).

4. Control rod according to claim 3, **characterized in that** at least one of the recesses (8) of the base body (2) surrounding the receiving opening (3) is or are formed by pressing the projection or the projections, in particular the teeth (15), of the hard metal insert (10) into the material of the base body (2) surrounding the receiving opening (3).

5. Control rod according to one of the preceding claims, **characterized in that** the outer peripheral surface (14) of the base body (12) of the hard metal insert (10) is formed non rotationally symmetrical, in particular has a polygonal shape.

6. Control rod according to the preceding claim, **characterized in that** the or at least one axial stop (9) is formed by pressing out material regions of the base body (2) of the control rod (1) during the pressing-in process of the tooth or the teeth (15) of the hard metal insert (10) into the region of the base body (2) surrounding the receiving opening (3).

7. Control rod according to one of the preceding claims, **characterized in that** at least one stop (9) is formed by a region of the base body (2) of the control rod (1) projecting into the receiving opening (3).

8. Control rod according to one of the preceding claims, **characterized in that** the hard metal insert (10) is formed from at least one hard metal or of at least one hard metal and a material containing at least one further component, in particular a hard metal-ceramic material.

9. Control rod according to one of the preceding claims, **characterized in that** the base body (12) of the hard metal insert (10) is formed from a metal matrix composite material which has particles of at least one hard material and a binding agent holding these hard material particles together, and optionally comprises at least one additional carbide.

10. Control rod according to claim 9, **characterized in that** the hard material particles are tungsten carbide particles and the binder is nickel, and that preferably the hard metal contains 86 to 94 wt.% tungsten carbide, preferably 87 +/- 0.2 wt.% or 92.8 +/- 0.2 wt.% tungsten carbide, 14 to 6 wt. % nickel, preferably 12 +/- 0.2 wt.% nickel or 6 +/- 0.2 wt.% nickel and optionally up to 2 wt.% of at least one additional carbide, preferably 0.6 to 1.4 wt.% or 1.2 +/-0.1 wt.% of at least one additional carbide, wherein the aforementioned weight proportions, apart from usual impurities and trace elements, add up to 100 wt.%.

11. Control rod according to one of the preceding claims, **characterized in that** the control rod is a control rod (1) for a turbocharger of an internal combustion engine.

12. Control joint for an automotive application, which has a control rod (1) and a joint element (20), wherein the control rod (1) and the joint element (20) are connected to one another in an articulated manner, **characterized in that** the control rod (1) is designed according to one of claims 1 to 11.

13. Control joint according to the preceding claim, **characterized in that** the joint element (20) has a base body (22) with a receiving opening (23), and that a bolt (32) is guided through the passage opening (13) of the hard metal insert (10) of the control rod (1) and the receiving opening (23) of the joint element (20).

14. Control joint according to one of the two preceding claims, **characterized in that** a hard metal insert (30) is inserted into the receiving opening (23) of the base body (22) of the joint element (20).

## Revendications

1. Barre de réglage pour une application automobile qui possède un corps de base (2) en forme de barre et une ouverture de réception (3) agencée dans celui-ci, dans laquelle un insert en métal dur (10) est inséré dans l'ouverture de réception (3) et l'insert en métal dur (10) présente un corps de base (12), dont le contour extérieur est adapté au contour intérieur de l'ouverture de réception (3) du corps de base (2) de la barre de réglage (1), et dans laquelle le coefficient de dilatation thermique du corps de base (2) de la barre de réglage (1) est supérieur au coefficient de dilatation thermique du corps de base (12) de l'insert en métal dur (10), **caractérisée en ce que** le corps de base (12) de l'insert en métal dur (10) présente un contour extérieur, par lequel un dispositif antirotation de l'insert en métal dur (10) est réalisé dans l'ouverture de réception (3) du corps de base (2) de la barre de réglage (1), **en ce que** le corps de base (2) de la barre de réglage (1) présente au moins au niveau d'un des deux côtés axiaux de l'ouverture de réception (3) du corps de base (12) de l'insert en métal dur (10) une butée (9 ; 9') agissant dans le sens axial pour le corps de base (12) de l'insert en métal dur (10).

2. Barre de réglage selon la revendication 1, **caractérisée en ce que** l'étendue axiale du corps de base (12) de l'insert en métal dur (10) est dimensionnée de telle manière que dans l'état inséré, un premier bord (12') du corps de base (12) de l'insert en métal dur (10) se trouve sous le bord (3') se trouvant de manière contigüe à celui-ci de l'ouverture de réception (3) de la barre de réglage (1), et **en ce que** la ou au moins une des butées (9, 9') axiales est réalisée par un rabattage au moins d'une partie de la zone entourant l'ouverture de réception (3) du corps de base (2) de la barre de réglage (1) sur le corps de base (12) de l'insert en métal dur (10).

3. Barre de réglage selon la revendication 1 ou 2, **caractérisée en ce que** le corps de base (12) de l'insert en métal dur (10) présente un nombre de saillies dépassant radialement de sa surface périphérique (14) extérieure, en particulier de dents (15), et **en ce que** dans l'état inséré de l'insert en métal dur (10), la saillie ou les saillies pénètrent dans des évidements (8) configurés en conséquence du corps de base (2).

4. Barre de réglage selon la revendication 3, **caractérisée en ce qu'**au moins un des évidements (8) entourant l'ouverture de réception (3) du corps de base (2) est ou sont réalisés par un enfoncement de la ou des saillies, en particulier des dents (15), de l'insert en métal dur (10) dans le matériau entourant l'ouverture de réception (3) du corps de base (2).

5. Barre de réglage selon l'une quelconque des revendications précédentes, **caractérisée en ce que** la surface périphérique (14) extérieure du corps de base (12) de l'insert en métal dur (10) est réalisée de manière non symétrique en rotation, en particulier présente une forme polygonale.

6. Barre de réglage selon la revendication précédente, **caractérisée en ce que** la ou au moins une butée (9) axiale est réalisée par une expulsion de zones de matériau du corps de base (2) de la barre de réglage (1) lors du processus d'enfoncement de la ou des dents (15) de l'insert en métal dur (10) dans la zone entourant les ouvertures de réception (3) du corps de base (2).

7. Barre de réglage selon l'une quelconque des revendications précédentes, **caractérisée en ce qu'**au moins une butée (9) est réalisée par une zone pénétrant dans l'ouverture de réception (3) du corps de base (2) de la barre de réglage (1).

8. Barre de réglage selon l'une quelconque des revendications précédentes, **caractérisée en ce que** l'insert en métal dur (10) est réalisé en au moins un métal dur ou en au moins un métal dur et un matériau contenant au moins un autre composant, en particulier un matériau de céramique et de métal dur.

9. Barre de réglage selon l'une quelconque des revendications précédentes, **caractérisée en ce que** le corps de base (12) de l'insert en métal dur (10) est réalisé en un matériau composite à matrice métallique qui présente des particules d'au moins un matériau dur et un liant maintenant ensemble ces particules de matériau dur ainsi qu'au choix au moins un carbure supplémentaire.

10. Barre de réglage selon la revendication 9, **caractérisée en ce que** les particules de matériau dur sont des particules de carbure de tungstène et le liant est du nickel, et **en ce que** de préférence, le métal dur présente 86 à 94 % en poids de carbure de tungstène, de préférence 87 +/-0,2 % en poids ou 92,8 +/-0,2 % en poids de carbure de tungstène, 14 à 6 % en poids de nickel, de préférence 12 +/-0,2 % en poids de nickel ou 6 +/-0,2 % en poids de nickel ainsi qu'au choix jusqu'à 2 % en poids au moins d'un carbure supplémentaire, de préférence 0,6 à 1,4 % en poids ou 1,2 +/-0,1 % en poids au moins d'un carbure supplémentaire, dans laquelle les proportions en poids précitées, sauf les impuretés et oligoéléments usuels se complètent à 100 % en poids.

11. Barre de réglage selon l'une quelconque des revendications précédentes, **caractérisée en ce que** la barre de réglage est une barre de réglage (1) pour un turbocompresseur d'un moteur à combustion interne.

12. Articulation de réglage pour une application automobile qui présente une barre de réglage (1) et un élément d'articulation (20), dans laquelle la barre de réglage (1) et l'élément d'articulation (20) sont reliés l'un à l'autre de manière articulée, **caractérisée en ce que** la barre de réglage (1) est réalisée selon l'une quelconque des revendications 1 à 11.

13. Articulation de réglage selon la revendication précédente, **caractérisée en ce que** l'élément d'articulation (20) présente un corps de base (22) avec une ouverture de réception (23), et **en ce qu'**un boulon (32) est guidé à travers l'ouverture de passage (13) de l'insert en métal dur (10) de la barre de réglage (1) et l'ouverture de réception (23) de l'élément d'articulation (20).

14. Articulation de réglage selon l'une quelconque des deux revendications précédentes, **caractérisée en ce qu'**un insert en métal dur (30) est inséré dans l'ouverture de réception (23) du corps de base (22) de l'élément d'articulation (20).
